# EUROPEAN PATENT APPLICATION

(11) **EP 4 838 742 A1**
(43) Date of publication of application: **11.11.2026**
(21) Application number: 26157860.3
(22) Date of filing: 11.02.2026
(51) Int. Cl.: H02J 3/38

(54) **ENERGY MANAGEMENT SYSTEM, DISTRIBUTED CONTROL SYSTEM, REMOTE TERMINAL SYSTEM, AND FREQUENCY REGULATION SYSTEM AND METHOD FOR POWER GRID**

(30) Priority: 08.05.2025 CN 202510591293
(71) Applicant: CSI Energy Storage Co., Ltd., Suzhou Jiangsu 215000 (CN)
(72) Inventor: LIU, Cong, Suzhou 215000 (CN); ZHOU, Kaihang, Suzhou 215000 (CN); YAO, Meiqi, Suzhou 215000 (CN)
(74) Representative: Potter Clarkson

(57) **Abstract**

Provided are an energy management system, a distributed control system, a remote terminal system, and a frequency regulation system and method for a power grid. The energy management system is configured to: receive a frequency regulation instruction transmitted by the remote terminal system and an operation parameter of a generator set transmitted by the distributed control system; generate a control instruction based on the frequency regulation instruction and the operation parameter; and perform frequency regulation on a power grid based on the control instruction. With the energy management system of the present disclosure, a response speed to a frequency regulation demand of the power grid can be increased, thereby improving the performance of joint frequency regulation for the power grid based on the energy management system of the energy storage system, the distributed control system of the generator set and the remote terminal system.

## Description

### FIELD

The present disclosure belongs to the field of power grid frequency regulation, and more particularly, to an energy management system, a distributed control system, a remote terminal system, and a frequency regulation system and method for a power grid.

### BACKGROUND

A frequency of a power grid is one of the important indicators of power quality. When the frequency exceeds a limit due to a mismatch between an electrical load and active power of a power source, various electrical devices may be damaged. Since the electrical load side cannot be controlled, regulating the active power relying on a power generation device has become the primary method for maintaining stability of the frequency of the power grid. A power generation output of new energy sources like photovoltaic and wind power is significantly affected by weather conditions, making it difficult to adjust the active power on demand. Meanwhile, other power generation entities have limited capacity. Therefore, thermal power generation units remain the main participants in current power grid frequency regulation.

However, the thermal power generation units have large delays and inertia, which may cause a regulation lag or even a reverse regulation during the frequency regulation. In the related art, an energy storage system with a fast response capability is introduced to assist the thermal power generation units in the frequency regulation, but communication delays exist between an energy management system (EMS) of the energy storage system and a distributed control system (DCS) of the thermal power generation unit and a remote terminal system (RTU), resulting in suboptimal frequency regulation performance.

### SUMMARY

The present disclosure aims to solve at least one of the technical problems in the related art. To this end, the present disclosure provides an energy management system, a distributed control system, a remote terminal system, and a frequency regulation system and method for a power grid, which enables the energy management system to respond more rapidly to the energy management system to a frequency regulation demand of the power grid, thereby improving the performance of joint frequency regulation for the power grid based on the energy management system of the energy storage system, the distributed control system of the generator set and the remote terminal system.

In a first aspect, the present disclosure provides an energy management system adapted to be communicatively connected to each of a remote terminal system and a distributed control system. The energy management system is configured to: receive a frequency regulation instruction transmitted by the remote terminal system and an operation parameter of a generator set transmitted by the distributed control system; generate a control instruction based on the frequency regulation instruction and the operation parameter; and perform frequency regulation on a power grid based on the control instruction.

According to the present disclosure, the energy management system is adapted to be communicatively connected to each of the remote terminal system and the distributed control system. The frequency regulation instruction transmitted by the remote terminal system and the operation parameter of the generator set transmitted by the distributed control system are directly received by the energy management system. The control instruction is generated by the energy management system based on the frequency regulation instruction and the operation parameter. Thus, the frequency regulation is performed on the power grid by the energy management system based on the control instruction. In this way, direct communication between the energy management system and the remote terminal system can be achieved, which increases a communication speed between the energy management system and the remote terminal system to reduce a communication delay. Consequently, the energy management system can respond more rapidly to the frequency regulation demand of the power grid, thereby improving the performance of joint frequency regulation for the power grid based on the energy management system of the energy storage system, the distributed control system of the generator set and the remote terminal system.

According to an embodiment of the present disclosure, the energy management system includes an I/O conversion module. The I/O conversion module is configured to be communicatively connected to a control cabinet in the distributed control system, and to receive the operation parameter transmitted by the control cabinet.

According to an embodiment of the present disclosure, the I/O conversion module is configured to be communicatively connected to the control cabinet through hard wiring.

According to an embodiment of the present disclosure, the energy management system is configured to be communicatively connected to a communication cabinet in the distributed control system through a communication line.

According to an embodiment of the present disclosure, the energy management system further includes a serial port server. The serial port server is configured to be communicatively connected to the communication cabinet in the distributed control system, and to transmit status information of the energy management system to the communication cabinet.

According to an embodiment of the present disclosure, the energy management system includes a control network switch. The control network switch is configured to be connected to the remote terminal system through a communication line, and to receive the frequency regulation instruction transmitted by the remote terminal system.

According to an embodiment of the present disclosure, the energy management system is configured to receive the frequency regulation instruction transmitted by the remote terminal system based on a Modbus RTU communication protocol.

In a second aspect, the present disclosure provides a distributed control system adapted to be communicatively connected to each of an energy management system and a remote terminal system. The distributed control system is configured to: obtain an operation parameter of a generator set in response to receiving a frequency regulation instruction transmitted by the remote terminal system; and transmit the operation parameter to the energy management system. The operation parameter is used for enabling the energy management system to perform frequency regulation on a power grid in combination with the frequency regulation instruction transmitted by the remote terminal system to the energy management system.

According to the present disclosure, the distributed control system is adapted to be communicatively connected to each of the energy management system and the remote terminal system. The operation parameter of the generator set is obtained by the distributed control system in response to receiving the frequency regulation instruction transmitted by the remote terminal system, and transmitted by the distributed control system to the energy management system, in such a manner that the energy management system can perform the frequency regulation on the power grid based on the operation parameter and the frequency regulation instruction transmitted by the remote terminal system to the energy management system. In this way, the direct communication between the energy management system and the remote terminal system can be achieved, which increases the communication speed between the energy management system and the remote terminal system to reduce the communication delay. Consequently, the energy management system can respond more rapidly to the frequency regulation demand of the power grid, thereby improving the performance of joint frequency regulation for the power grid based on the energy management system of the energy storage system, the distributed control system of the generator set and the remote terminal system.

According to an embodiment of the present disclosure, the distributed control system includes a control cabinet configured to transmit the operation parameter to the energy management system.

According to an embodiment of the present disclosure, the distributed control system further includes a communication cabinet configured to receive status information of the energy management system transmitted by a serial port server included in the energy management system.

In a third aspect, the present disclosure provides a remote terminal system adapted to be communicatively connected to each of a distributed control system and an energy management system. The remote terminal system is configured to: transmit a frequency regulation instruction to each of the distributed control system and the energy management system in response to receiving an AGC signal. The frequency regulation instruction is used for enabling the distributed control system to obtain an operation parameter of a generator set and to transmit the operation parameter to the energy management system. The frequency regulation instruction is further used for enabling the energy management system to generate a control instruction based on the operation parameter transmitted by the distributed control system and the frequency regulation instruction, and to perform frequency regulation on a power grid based on the control instruction.

According to the present disclosure, the remote terminal system is adapted to be communicatively connected to each of the distributed control system and the energy management system. The frequency regulation instruction is transmitted by the remote terminal system to each of the distributed control system and the energy management system in response to receiving the AGC signal. Further, the energy management system is enabled by the frequency regulation instruction to generate the control instruction based on the operation parameter transmitted by the distributed control system and the frequency regulation instruction, and to perform the frequency regulation on the power grid based on the control instruction. In this way, the direct communication between the energy management system and the remote terminal system can be achieved, which increases the communication speed between the energy management system and the remote terminal system to reduce the communication delay. Consequently, the energy management system can respond more rapidly to the frequency regulation demand of the power grid, thereby improving the performance of joint frequency regulation for the power grid based on the energy management system of the energy storage system, the distributed control system of the generator set and the remote terminal system.

According to an embodiment of the present disclosure, the remote terminal system is further configured to: receive active power of an energy storage battery module transmitted by a converter and booster module and the operation parameter transmitted by the distributed control system. The active power of the energy storage battery module is a parameter adjusted by the converter and booster module and the energy storage battery module based on the control instruction.

In a fourth aspect, the present disclosure provides a frequency regulation system for a power grid. The frequency regulation system includes: an energy storage battery module; a converter and booster module; the energy management system described in the first aspect, the energy management system being connected to each of the energy storage battery module and the converter and booster module; the distributed control system described in the second aspect, the distributed control system being connected to the energy management system; and the remote terminal system described in the third aspect, the remote terminal system being connected to each of the energy management system and the distributed control system.

According to the present disclosure, the frequency regulation system for the power grid includes: the energy storage battery module; the converter and booster module; the energy management system configured to receive the frequency regulation instruction transmitted by the remote terminal system and the operation parameter of the generator set transmitted by the distributed control system, generate the control instruction based on the frequency regulation instruction and the operation parameter, and perform the frequency regulation on the power grid based on the control instruction; the distributed control system configured to obtain and transmit, to the energy management system, the operation parameter of the generator set in response to receiving the frequency regulation instruction transmitted by the remote terminal system; and the remote terminal system configured to transmit the frequency regulation instruction to each of the distributed control system and the energy management system in response to receiving the AGC signal. In this way, the direct communication between the energy management system and the remote terminal system can be achieved, which increases the communication speed between the energy management system and the remote terminal system to reduce the communication delay. Consequently, the energy management system can respond more rapidly to the frequency regulation demand of the power grid, thereby improving the performance of joint frequency regulation for the power grid based on the energy management system of the energy storage system, the distributed control system of the generator set and the remote terminal system.

In a fifth aspect, the present disclosure provides a frequency regulation method for a power grid. The frequency regulation method includes: transmitting, by a remote terminal system in response to receiving an AGC signal, a frequency regulation instruction to each of an energy management system and a distributed control system; transmitting, by the distributed control system in response to the frequency regulation instruction, an operation parameter of a generator set to the energy management system; and generating, by the energy management system, a control instruction based on the frequency regulation instruction and the operation parameter, and performing, by the energy management system, frequency regulation on the power grid based on the control instruction.

With the frequency regulation method according to the present disclosure, the remote terminal system transmits the frequency regulation instruction is transmitted to each of the energy management system and the distributed control system in response to receiving the AGC signal. The distributed control system transmits the operation parameter of the generator set to the energy management system in response to the frequency regulation instruction. The energy management system generates the control instruction based on the frequency regulation instruction and the operation parameter, and performs the frequency regulation on the power grid based on the control instruction. In this way, the direct communication between the energy management system and the remote terminal system can be achieved, which increases the communication speed between the energy management system and the remote terminal system to reduce the communication delay. Consequently, the energy management system can respond more rapidly to the frequency regulation demand of the power grid, thereby improving the performance of joint frequency regulation for the power grid based on the energy management system of the energy storage system, the distributed control system of the generator set and the remote terminal system.

The above one or more technical solutions in the embodiments of the present disclosure have at least one of the following technical effects.

By configuring the energy management system to be communicatively connected to each of the remote terminal system and the distributed control system, the energy management system directly receives the frequency regulation instruction transmitted by the remote terminal system and the operation parameter of the generator set transmitted by the distributed control system, generates the control instruction based on the frequency regulation instruction and the operation parameter, and performs the frequency regulation on the power grid based on the control instruction. In this way, the direct communication between the energy management system and the remote terminal system can be achieved, which increases the communication speed between the energy management system and the remote terminal system to reduce the communication delay. Consequently, the energy management system can respond more rapidly to the frequency regulation demand of the power grid, thereby improving the performance of joint frequency regulation for the power grid based on the energy management system of the energy storage system, the distributed control system of the generator set and the remote terminal system.

Further, by providing the I/O conversion module communicatively connected to the control cabinet through the hard wiring, an efficiency and a quality of data transmission between the distributed control system and the energy management system can be improved by leveraging advantages of the hard wiring in transmission speed and stability, further increasing the response speed of the energy management system to the frequency regulation demand of the power grid.

Furthermore, by providing the serial port server configured to be communicatively connected to the communication cabinet in the distributed control system and to transmit the status information of the energy management system after the protocol conversion to the communication cabinet, the energy management system can perform a communication protocol conversion based on its own status information and provide real-time feedback to the distributed control system during joint frequency regulation of the power grid based on the energy management system, the distributed control system, and the remote terminal system. Such real-time feedback enables the distributed control system to perform a corresponding processing based on feedback information, such as performing emergency handling through controlling the generator set for frequency regulation in the event of a fault in the energy management system. Therefore, fault tolerance of the joint frequency regulation of the power grid based on the energy management system, the distributed control system, and the remote terminal system can be improved.

Additional aspects and advantages of the present disclosure will be provided at least in part in the following description, or will become apparent at least in part from the following description, or can be learned from practicing of the present disclosure.

### BRIEF DESCRIPTION OF THE DRAWINGS

The above and/or additional aspects and advantages of the present disclosure will become more apparent and more understandable from the following description of embodiments taken in conjunction with the accompanying drawings.
FIG. 1 is a schematic diagram showing a structure of a frequency regulation system for a power grid according to an embodiment of the present disclosure.
FIG. 2 illustrates an execution logic of a frequency regulation system for a power grid according to an embodiment of the present disclosure.
FIG. 3 is a schematic diagram showing a front structure of a cabinet of an energy management system according to an embodiment of the present disclosure.
FIG. 4 is a schematic diagram showing a rear structure of a cabinet of an energy management system according to an embodiment of the present disclosure.
FIG. 5 is a flowchart illustrating a frequency regulation method for a power grid according to an embodiment of the present disclosure.
FIG. 6 is a schematic diagram showing a structure of an electronic device according to an embodiment of the present disclosure.

### DETAILED DESCRIPTION

Technical solutions according to embodiments of the present disclosure will be clearly described below in combination with accompanying drawings of the embodiments of the present disclosure. Obviously, the embodiments described below are only a part of the embodiments of the present disclosure, rather than all of the embodiments. On a basis of the embodiments in the present disclosure, all other embodiments obtained by a person skilled in the art shall fall within the protection scope of the present disclosure.

Terms such as "first" and "second" in the specification of the present disclosure and the appended claims are used only to distinguish between similar objects, rather than to describe a particular order or sequence. It should be understood that the numerals as used can be interchanged where appropriate, to enable the embodiments of the present disclosure described herein to be implemented in an order other than that illustrated or described herein. Also, the objects distinguished by the terms such as "first" and "second" are usually objects of the same type. The quantity of the objects is not limited. For example, one or a plurality of first objects may be provided. In addition, "and/or" throughout the specification and appended claims indicates at least one of the objects associated with "and/or". The character "/" generally indicates that the associated objects before and after the character are in an "or" relationship.

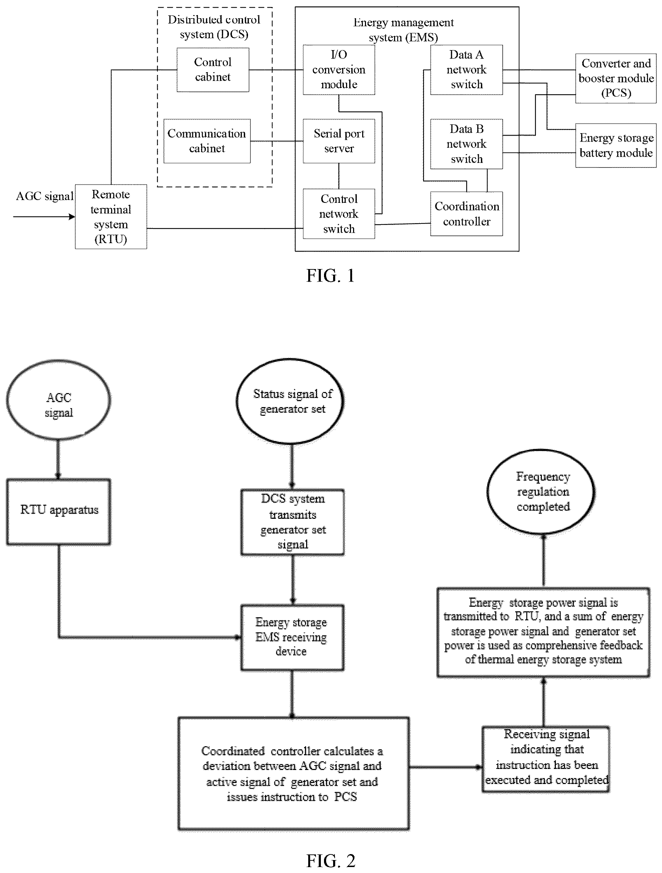

An energy management system provided by the present disclosure will be described below in conjunction with FIG. 1 to FIG. 4.

As illustrated in FIG. 1, an embodiment of the present disclosure provides an energy management system. The energy management system is configured to: receive a frequency regulation instruction transmitted by a remote terminal system and an operation parameter of a generator set transmitted by a distributed control system; generate a control instruction based on the frequency regulation instruction and the operation parameter; and perform frequency regulation on a power grid based on the control instruction.

In this embodiment, the energy management system (EMS) is adapted to be communicatively connected to each of the remote terminal system and the distributed control system.

The remote terminal system is a power plant RTU, which may be connected to each of the generator set, the energy management system, and the distributed control system, to remotely monitor an operation status of each of the generator set, the energy management system, and the distributed control system. The remote terminal system may also be connected to the power grid, to receive an AGC signal from the power grid, and issue the frequency regulation instruction to the energy management system and the distributed control system based on the AGC signal, enabling the energy management system and the distributed control system to perform the frequency regulation on the power grid based on the frequency regulation instruction.

The generator set may include a thermal power generation unit or a new energy generator set under stable weather conditions. In other embodiments, the generator set may also be other types of generator sets with relatively large power generation capacity. The generator set is not limited to any of these examples.

The Automatic Generation Control (AGC) signal (i.e., an automatic generation control instruction) indicates a power generation adjustment amount required by the power grid, which is calculated based on a real-time load demand of the power grid, a frequency deviation, and other operational constraints.

The distributed control system is a system for centralized management and decentralized control (DCS) of the generator set. During actual execution, data can be collected through sensors, actuators, and other devices distributed across various parts of the generator set, to measure various parameters such as temperature, pressure, flow rate, vibration, or power.

The remote terminal system may directly communicate with the energy management system. In some embodiments, communication between the remote terminal system and the energy management system may be performed based on a CAN communication protocol. Of course, in some embodiments, the communication may also be performed based on other communication protocols, which will be specifically described in the following embodiments and are not elaborated here.

In some embodiments, the distributed control system may be communicatively connected to the energy management system through a communication line, such as a CAN communication line, i.e., the distributed control system may be communicatively connected to the energy management system based on a CAN communication protocol. In other embodiments, the distributed control system may also be communicatively connected to the energy management system through hard wiring, which will be specifically described in the following embodiments.

The frequency regulation instruction may be an operational instruction transmitted by the remote terminal system to the energy management system and the distributed control system subsequent to a reception of the AGC signal.

The frequency regulation instruction may include the power generation adjustment amount required by the power grid, or the like.

The operation parameter may be a status of the generator set obtained by the distributed control system subsequent to the reception of the AGC signal, or the like.

In some embodiments, the operation parameter may include active power of the generator set.

During actual execution, the energy management system may also be adapted to be communicatively connected to an energy storage battery module and a converter and booster module in the energy storage system, for managing an operation status of each of the energy storage battery module and the converter and booster module.

The energy storage battery module is configured to store electrical energy, and is capable of providing power to the power grid or absorbing excess power from the power grid.

The converter and booster module is configured, when the energy storage battery module provides the power to the power grid, to convert a direct current output by the energy storage battery module into an alternating current, and adjust a voltage of the alternating current to match that of the power grid, for enabling the alternating current to be delivered to the power grid. Alternatively, the converter and booster module is configured, when the energy storage battery module absorbs the excess power from the power grid, to convert an alternating current from the power grid into a direct current before the alternating current is fed into the energy storage battery module, and adjust a voltage of the direct current to match that of the energy storage battery module, for charging the energy storage battery module.

The control instruction may include power that the energy storage battery module needs to output or absorb and is determined based on parameters such as the frequency regulation instruction and the status of the generator set.

It should be understood that the control instruction serves as a reference for the energy storage battery module to output or absorb power.

In some embodiments, the energy management system can be configured to generate the control instruction based on a difference between the frequency regulation instruction and the operation parameter.

In this embodiment, the difference between the frequency regulation instruction and the operation parameter can be understood as a difference between the power generation adjustment amount required by the power grid and the active power of the generator set. That is, the control instruction is the difference between the power generation adjustment amount required by the power grid and the active power of the generator set.

It should be understood that the control instruction may be a positive value or a negative value.

During actual execution, the energy management system may forward the control instruction to the energy storage battery module and the converter and booster module. The energy storage battery module may determine the active power to be output or absorbed based on the control instruction in response to receiving the control instruction, and correspondingly output or absorb the active power. The converter and booster module may perform power conversion and voltage boosting based on whether the energy storage battery module outputs or absorbs the active power, so that the energy storage battery module to output the active power and deliver it to the grid or to absorb the active power from the grid.

When the control instruction is the positive value, the energy storage battery module outputs the active power. When the control instruction is the negative value, the energy storage battery module absorbs the active power.

In a process of performing frequency regulation on the power grid using a thermal power generation unit, a regulation lag or even a reverse regulation may occur during the frequency regulation due to issues such as large delays and inertia of the thermal power generation unit. In the related art, an energy storage system with a fast response capability is introduced to assist the thermal power generation unit in the frequency regulation, but communication delays exist between the energy management system of the energy storage system and the distributed control system of the thermal power generation unit and the remote terminal system, resulting in suboptimal frequency regulation performance. For example, when the remote terminal system receives the AGC signal, the remote terminal system does not communicate directly with the energy storage management system. Instead, the remote terminal system needs to transmit the frequency regulation instruction to the distributed control system. The distributed control system then obtains the operation parameter of the generator set, generates the control instruction based on the frequency regulation instruction and the operation parameter, and transmits the control instruction to the energy management system. This causes the communication delay between the energy management system and the remote terminal system, reducing a response speed of the energy management system.

In the present disclosure, the energy management system is adapted to be communicatively connected to each of the remote terminal system and the distributed control system. The energy management system can directly communicate with the remote terminal system through the communication line, such as the CAN communication line. During actual execution, the energy management system can directly receive the frequency regulation instruction transmitted by the remote terminal system, and receive the operation parameter of the generator set transmitted by the distributed control system. The energy management system generates the control instruction internally based on the frequency regulation instruction and the operation parameter, and performs the frequency regulation on the power grid based on the control instruction. In this way, direct communication between the energy management system and the remote terminal system can be achieved, which increases a communication speed between the energy management system and the remote terminal system to reduce a communication delay. Consequently, the energy management system can respond more rapidly to the frequency regulation demand of the power grid, thereby improving the performance of joint frequency regulation for the power grid based on the energy management system of the energy storage system, the distributed control system of the generator set and the remote terminal system.

According to the embodiments of the present disclosure, the energy management system is adapted to be communicatively connected to each of the remote terminal system and the distributed control system. The energy management system directly receives the frequency regulation instruction transmitted by the remote terminal system and the operation parameter of the generator set transmitted by the distributed control system, generates the control instruction based on the frequency regulation instruction and the operation parameter, and performs the frequency regulation on the power grid based on the control instruction. In this way, the direct communication between the energy management system and the remote terminal system can be achieved, which increases the communication speed between the energy management system and the remote terminal system to reduce the communication delay. Consequently, the energy management system can respond more rapidly to the frequency regulation demand of the power grid, thereby improving the performance of joint frequency regulation for the power grid based on the energy management system of the energy storage system, the distributed control system of the generator set and the remote terminal system.

In some embodiments, the energy management system includes an I/O conversion module. The I/O conversion module is configured to be communicatively connected to a control cabinet in the distributed control system, and to receive the operation parameter transmitted by the control cabinet.

In this embodiment, the control cabinet in the distributed control system is configured to transmit critical signals related to control or protection, such as start signals, stop signals, or power signals.

The I/O conversion module and the control cabinet in the distributed control system may be communicatively connected based on any implementable communication protocol, such as a Modbus TCP communication protocol. In some embodiments, the I/O conversion module and the control cabinet in the distributed control system may also be connected through the hard wiring, which will be specifically described in the following embodiments and are not elaborated here.

It should be understood that the distributed control system may include the control cabinet. During actual execution, the remote terminal system can transmit the frequency regulation instruction to the control cabinet in the distributed control system in response to receiving the AGC signal. The operation parameter of the generator set may be obtained and transmitted by the control cabinet in the distributed control system to the I/O conversion module of the energy management system, in response to receiving the frequency regulation instruction.

The I/O conversion module can be configured to convert a communication protocol of the operation parameter output by the control cabinet in the distributed control system into a communication protocol applicable to the energy management system, or to convert a hardwired signal into a signal under a communication protocol applicable to the energy management system.

For example, the I/O conversion module can be configured to convert communication protocols applicable to the distributed control system, such as TCP/IP or Modbus TCP, into communication protocols applicable to the energy management system, such as Modbus RTU or Profibus.

Additionally, the I/O conversion module may include a plurality of I/O modules (input and output modules). During actual execution, based on actual requirements, the plurality of I/O modules in the I/O conversion module of the energy management system may be connected to other devices and receive various types of signals, expanding applications of the energy management system.

With the energy management system according to the embodiments of the present disclosure, by providing the I/O conversion module configured to be communicatively connected to the control cabinet in the distributed control system and to receive the operation parameter transmitted by the control cabinet, the operation parameter transmitted by the distributed control system can be converted into the operation parameter under the communication protocol applicable to the energy management system. This ensures communication compatibility between the distributed control system and the energy management system, and direct interfacing between the energy management system and the distributed control system, without requiring other complex signal transmission modules. Therefore, efficient transmission and interaction of data between the energy management system and the distributed control system can be achieved. In addition, since the I/O conversion module can include the plurality of I/O modules for receiving various types of signals, functional expansion is facilitated.

In some embodiments, the I/O conversion module is configured to be communicatively connected to the control cabinet through the hard wiring.

In this embodiment, the hard wiring refers to a method for connecting circuit components through a physical connection.

During actual execution, under the hard wiring connection method, a signal transmission loss is small and is not affected by factors such as electromagnetic interference, resulting in a fast signal transmission speed and stable signal transmission.

It should be understood that, when the I/O conversion module is communicatively connected to the control cabinet through the hard wiring, the distributed control system can transmit the operation parameter to the I/O conversion module of the energy management system based on the hard wiring, and the I/O conversion module converts the operation parameter into the operation parameter under the communication protocol applicable to the energy management system. In addition, compared with communication through the communication line, communication through the hard wiring offers a faster communication speed and higher stability.

During actual execution, specifications of the hard wiring can be determined as desired, and the present disclosure is not limited in this regard.

With the energy management system according to the embodiments of the present disclosure, by providing the I/O conversion module configured to be communicatively connected to the control cabinet through the hard wiring, an efficiency and a quality of data transmission between the distributed control system and the energy management system can be improved by leveraging advantages of the hard wiring in transmission speed and stability, further increasing the response speed of the energy management system to the frequency regulation demand of the power grid.

In some embodiments, the energy management system is configured to be communicatively connected to the communication cabinet in the distributed control system through the communication line.

In this embodiment, the energy management system may be communicatively connected to the communication cabinet through any implementable communication line, such as the CAN communication line or Modbus RTU. The present disclosure is not limited in this regard.

It should be understood that the distributed control system may further include the communication cabinet. The communication cabinet is configured to transmit non-critical signals such as status information or execution status, for example, power level status.

During actual execution, the distributed control system needs to monitor an execution status of the energy management system in performing the frequency regulation on the power grid. Therefore, by configuring the energy management system to be communicatively connected to the distributed control system through the communication line, large amounts of complex and different types of digital signals can be transmitted between the energy management system and the distributed control system. For example, the energy management system can transmit various types of data, such as frequency regulation execution fault signals and fault causes, to the distributed control system through the communication line, enabling the distributed control system to comprehensively obtain the execution status of the energy management system in performing the frequency regulation on the power grid based on complex and different types of signals. Therefore, such a design facilitates an emergency handling or other actions by the distributed control system based on the execution status.

With the energy management system according to the embodiments of the present disclosure, by configuring the energy management system to be communicatively connected to the communication cabinet in the distributed control system through the communication line, complex and different types of digital signals can be transmitted between the energy management system and the distributed control system, enabling the distributed control system to comprehensively obtain the execution status of the energy management system in performing the frequency regulation on the power grid. Therefore, such a design facilitates the emergency handling or other actions by the distributed control system based on the execution status, improving reliability of the joint frequency regulation for the power grid based on the energy management system, the distributed control system, and the remote terminal system.

In some embodiments, the energy management system includes a serial port server configured to be communicatively connected to the communication cabinet in the distributed control system, and to transmit status information of the energy management system to the communication cabinet.

In this embodiment, the serial port server may be configured to perform a protocol conversion and data transmission.

The status information of the energy management system may include status quantities such as task execution progress and remaining electricity.

During actual execution, the energy management system can transmit its own status information to the communication cabinet in the distributed control system through the serial port server. A communication protocol corresponding to the status information of the energy management system may be converted by the serial port server into a communication protocol applicable to the communication cabinet in the distributed control system.

It should be understood that, during the joint frequency regulation for the power grid based on the energy management system, the distributed control system, and the remote terminal system, the energy management system can convert the communication protocol of its own status information through the serial port server, to provide real-time feedback to the distributed control system, enabling the distributed control system to obtain the status information of the energy management system. In this way, the distributed control system can perform a corresponding processing based on the status information of the energy management system. For example, in a case where the energy management system reports a fault, e.g., the energy management system fails to operate normally due to insufficient electricity in the energy storage battery module, the distributed control system controls the generator set to perform the frequency regulation.

With the energy management system according to the embodiments of the present disclosure, by providing the serial port server configured to be communicatively connected to the communication cabinet in the distributed control system and to transmit the status information of the energy management system after the protocol conversion to the communication cabinet, the energy management system can perform a communication protocol conversion based on its own status information and provide real-time feedback to the distributed control system during joint frequency regulation of the power grid based on the energy management system, the distributed control system, and the remote terminal system. Such real-time feedback enables the distributed control system to perform a corresponding processing based on feedback information, such as performing emergency handling through controlling the generator set for frequency regulation in the event of a fault in the energy management system. Therefore, fault tolerance of the joint frequency regulation of the power grid based on the energy management system, the distributed control system, and the remote terminal system can be improved.

In some embodiments, the energy management system includes a control network switch configured to be connected to the remote terminal system through a communication line, and to receive the frequency regulation instruction transmitted by the remote terminal system.

In this embodiment, the control network switch is a network device that may be configured to perform multi-port data switching and efficient data forwarding.

During actual execution, the control network switch may be connected to the remote terminal system through the communication line and perform direct data transmission. That is, the control network switch may directly receive the frequency regulation instruction transmitted by the remote terminal system through the communication line.

The control network switch can be connected to the remote terminal system through any implementable communication line, such as the CAN communication line. In some embodiments, the control network switch can also be connected to the remote terminal system through other communication lines, which will be specifically described in the following embodiments and are not elaborated here.

During actual execution, the control network switch in the energy management system also needs to be connected to the I/O conversion module to receive the operation parameter transmitted by the distributed control system and forwarded by the I/O conversion module. Further, during actual execution, the control network switch in the energy management system also needs to be connected to the serial port server to transmit the status information of the energy management system to the distributed control system.

With the energy management system according to the embodiments of the present disclosure, by providing the control network switch configured to be connected to the remote terminal system through the communication line and to receive the frequency regulation instruction transmitted by the remote terminal system, the energy management system can not only uniformly receive the frequency regulation instruction and the operation parameter based on the control network switch, but also output its own status information based on the control network switch. In this way, during the joint frequency regulation for the power grid based on the energy management system, the distributed control system, and the remote terminal system, efficient transmission of various types of data in the energy management system can be enabled, further increasing the response speed of the energy management system to the frequency regulation demand of the power grid.

In some embodiments, the energy management system is configured to receive the frequency regulation instruction transmitted, based on a Modbus RTU communication protocol, by the remote terminal system.

In this embodiment, the Modbus RTU communication protocol can support long-distance communication. In addition, use of differential signals can effectively mitigate electromagnetic interference and improve a communication efficiency.

With the energy management system according to the embodiments of the present disclosure, by receiving the frequency regulation instruction transmitted by the remote terminal system based on the Modbus RTU communication protocol, a communication efficiency between the remote terminal system and the energy management system can be improved, further increasing the response speed of the energy management system to the frequency regulation demand of the power grid.

In some embodiments, the energy management system further includes a coordination controller and at least one data network switch. The coordination controller is configured to be communicatively connected to each of the control network switch and the at least one data network switch through the communication line. The at least one data network switch is configured to be communicatively connected to each of the energy storage battery module and the converter and booster module through the communication line.

In this embodiment, the communication line mentioned herein may be any communication line involved in the above embodiments, and thus details thereof will be omitted here.

The coordination controller serves as a control center of the energy management system, and can be configured to monitor the operation status of the energy management system and process data input into the energy management system or data in the energy management system.

During the joint frequency regulation for the power grid based on the energy management system, the distributed control system, and the remote terminal system, the coordination controller may be configured to generate the control instruction based on the frequency regulation instruction and the operation parameter, and transmit the control instruction to the at least one data network switch.

The data network switch is configured to process and transmit data related to energy management, such as transmitting remaining electricity of the energy storage battery module, or transmitting an amount of active power (e.g., the control instruction) that the energy storage battery module needs to output or absorb.

It should be understood that, during the joint frequency regulation for the power grid based on the energy management system, the distributed control system, and the remote terminal system, the at least one data network switch may receive the control instruction transmitted by the coordination controller and transmit the control instruction to the energy storage battery module and the converter and booster module, enabling the energy storage battery module and the converter and booster module to perform the frequency regulation on the power grid based on the control instruction.

Additionally, the energy storage battery module may transmit its own electricity status to the coordination controller through the data network switch. The electricity status along with other status information of the energy management system may be transmitted by the coordination controller to the control network switch, for the control network switch to forward the electricity status and other status information of the energy management system to the distributed control system through the serial port server.

When the at least one data network switch includes a plurality of data network switches, the plurality of data network switches serve as backups for each other, which ensures that the joint frequency regulation can still proceed smoothly in the event of a fault in one data network switch, improving the fault tolerance.

It should be noted that, during actual execution, after the energy storage battery module and the converter and booster module complete the frequency regulation on the power grid based on the control instruction, the converter and booster module can further transmit a completion signal to the remote terminal module, to indicate to the remote terminal module that the frequency regulation has been completed. In addition, an actual amount of power output or absorbed by the energy storage battery module can be further transmitted by the converter and booster module to the remote terminal module, to facilitate monitoring of a completion status of the frequency regulation by the remote terminal module.

In some embodiments, the converter and booster module can be configured to directly communicate with the remote terminal module through the communication line, to facilitate direct transmission of the completion signal and/or the actual amount of power output or absorbed by the energy storage battery module to the remote terminal module by the converter and booster module. In some embodiments, the converter and booster module can be further configured to transmit the completion signal and/or the actual amount of power output or absorbed by the energy storage battery module to the data network switch in the energy management system, which is then forwarded sequentially by the data network switch, the coordination controller, and the control network switch to the remote terminal module.

Similarly, subsequent to a completion of the frequency regulation on the power grid performed by the energy storage battery module and the converter and booster module based on the control instruction, the distributed control system may also feed back an actual amount of power of the generator set to the remote terminal system, to facilitate the monitoring of the completion status of the frequency regulation by the remote terminal module.

With the energy management system according to the embodiments of the present disclosure, by providing the coordination controller configured to be communicatively connected to each of the energy storage battery module and the converter and booster module through the communication line and communicatively connected to each of the control network switch and the at least one data network switch through the communication line, the energy management system can process the frequency regulation instruction and the operation parameter based on the coordination controller to generate the control instruction, and transmit the control instruction to the energy storage battery module and the converter and booster module based on the data network switch, in such a manner that the energy storage battery module and the converter and booster module can perform the frequency regulation on the power grid based on the control instruction, improving the reliability of the joint frequency regulation for the power grid based on the energy management system, the distributed control system, and the remote terminal system.

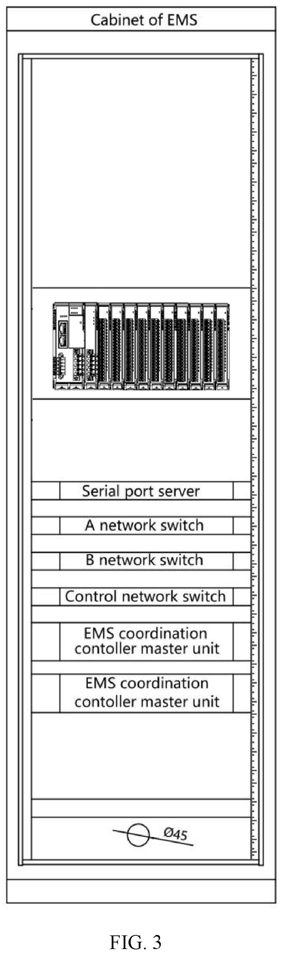

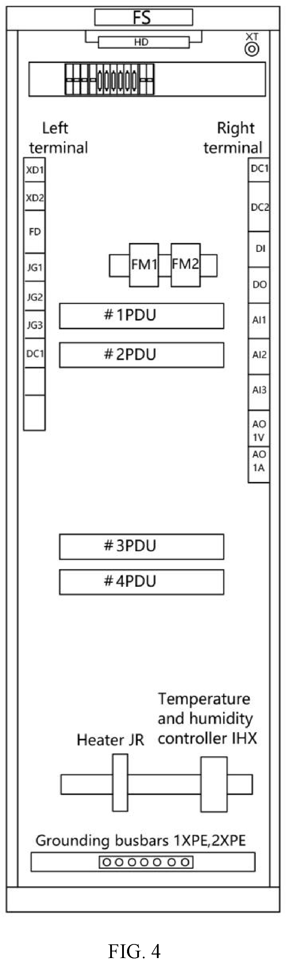

As illustrated in FIG. 3, in some embodiments, all modules included in the energy management system may be integrated into a single cabinet, and various I/O modules (such as a left terminal and a right terminal) are arranged at a back of the cabinet as illustrated in FIG. 4, to facilitate introduction of various hardwired signals, which is favorable to functional expansion of the energy management system.

As illustrated in FIG. 1, the embodiments of the present disclosure further provide a distributed control system.

In this embodiment, the distributed control system is configured to be communicatively connected to each of the energy management system and the remote terminal system.

A specific connection method between the distributed control system and the energy management system has already been described in the above embodiments of the energy management system, and thus details thereof will be omitted here.

In some embodiments, the distributed control system may be communicatively connected to the remote terminal system through the communication line. The communication line may be any communication line involved in the above embodiments, and is therefore not limited in this regard. In some embodiments, the distributed control system can also be communicatively connected to the remote terminal system through the hard wiring, increasing the communication speed and stability.

During actual execution, the distributed control system is configured to obtain the operation parameter of the generator set in response to receiving the frequency regulation instruction transmitted by the remote terminal system, and transmit the operation parameter to the energy management system. The operation parameter is used for enabling the energy management system to perform the frequency regulation on the power grid in combination with the frequency regulation instruction transmitted by the remote terminal system to the energy management system.

It should be understood that, after receiving the AGC signal, the remote terminal system can transmit the frequency regulation instruction to the distributed control system through the communication line or the hard wiring, and also transmit the frequency regulation instruction to the energy management system through the communication line. The distributed control system will obtain the operation parameter of the generator set in response to receiving the frequency regulation instruction, and transmit the operation parameter of the generator set to the energy management system. The control instruction is generated by the energy management system based on the received frequency regulation instruction and operation parameter. The frequency regulation is performed on the power grid by the energy management system based on the control instruction.

According to the embodiments of the present disclosure, the distributed control system is configured to be communicatively connected to each of the energy management system and the remote terminal system. The operation parameter of the generator set is obtained by the distributed control system in response to receiving the frequency regulation instruction transmitted by the remote terminal system, and transmitted by the distributed control system to the energy management system, in such a manner that the energy management system can perform the frequency regulation on the power grid based on the operation parameter and in combination with the frequency regulation instruction transmitted by the remote terminal system to the energy management system. In this way, the direct communication between the energy management system and the remote terminal system can be achieved, which increases the communication speed between the energy management system and the remote terminal system to reduce the communication delay. Consequently, the energy management system can respond more rapidly to the frequency regulation demand of the power grid, thereby improving the performance of joint frequency regulation for the power grid based on the energy management system of the energy storage system, the distributed control system of the generator set and the remote terminal system.

In some embodiments, the distributed control system includes the control cabinet configured to transmit the operation parameter to the energy management system.

In this embodiment, the control cabinet is configured to transmit critical signals related to control or protection, such as start signals, stop signals, or power signals.

During actual execution, the control cabinet may be connected to the I/O conversion module in the energy management system through the hard wiring, to quickly and stably transmit the operation parameter of the generator set to the energy management system through the I/O conversion module, further increasing a response speed of the energy management system to frequency regulation of the power grid.

It should be noted that, in a case where the distributed control system includes the control cabinet, the distributed control system is communicatively connected to the remote terminal system through the control cabinet.

With the distributed control system according to the embodiments of the present disclosure, by providing the control cabinet configured to transmit the operation parameter to the energy management system, the control cabinet can be connected to the I/O conversion module in the energy management system through the hard wiring, to improve an efficiency with which the distributed control system transmits the operation parameter to the energy management system, further increasing the response speed of the energy management system to the frequency regulation of the power grid.

In some embodiments, the distributed control system includes the communication cabinet configured to receive the status information of the energy management system transmitted by the serial port server included in the energy management system.

In this embodiment, the communication cabinet is configured to transmit non-critical signals such as status information or execution status, for example, power level status.

During actual execution, the communication cabinet of the distributed control system is configured to be communicatively connected to the serial port server in the energy management system, for receiving the status information of the energy management system transmitted by the serial port server.

The status information of the energy management system may include status quantities such as task execution progress and remaining electricity.

In actual execution, during the joint frequency regulation for the power grid based on the energy management system, the distributed control system, and the remote terminal system, the energy management system may feed back its own status information to the distributed control system in real time through the serial port server, enabling the distributed control system to obtain the status information of the energy management system. In this way, the distributed control system can perform a corresponding processing based on the status information of the energy management system. For example, in a case where the energy management system reports a fault, the distributed control system controls the generator set to perform the frequency regulation.

With the distributed control system according to the embodiments of the present disclosure, by providing the communication cabinet configured to receive the status information of the energy management system, the distributed control system can obtain the status information of the energy management system during the joint frequency regulation. Thus, in the event of a fault in the energy management system, the generator set can be controlled to perform the frequency regulation, improving the performance of joint frequency regulation for the power grid based on the energy management system of the energy storage system, the distributed control system of the generator set and the remote terminal system.

As illustrated in FIG. 1, the embodiments of the present disclosure further provide a remote terminal system.

In this embodiment, the remote terminal system is adapted to be communicatively connected to each of the distributed control system and the energy management system.

A specific connection method between the remote terminal system and each of the energy management system and the distributed control system has already been described in the above embodiments, and thus details thereof will be omitted here.

During actual execution, the remote terminal system is configured to transmit the frequency regulation instruction to each of the distributed control system and the energy management system in response to receiving the AGC signal, and is further configured to enable the energy management system to generate the control instruction based on the operation parameter transmitted by the distributed control system and the frequency regulation instruction, and to perform the frequency regulation on the power grid based on the control instruction.

The frequency regulation instruction is used for enabling the distributed control system to obtain the operation parameter of the generator set and to transmit the operation parameter to the energy management system.

It should be understood that, the remote terminal system may receive the AGC signal, and directly transmit the frequency regulation instruction to each of the distributed control system and the energy management system in response to receiving the AGC signal. The operation parameter of the generator set is obtained and transmitted by the distributed control system to the energy management system, in response to receiving the frequency regulation instruction. The frequency regulation instruction transmitted by the remote terminal system and the operation parameter transmitted by the distributed control system are received by the energy management system. Thus, the control instruction is generated by the energy management system based on the frequency regulation instruction and the operation parameter. The frequency regulation is performed by the energy management system on the power grid based on the control instruction.

According to the embodiments of the present disclosure, the remote terminal system is communicatively connected to each of the distributed control system and the energy management system. The remote terminal system is configured to transmit the frequency regulation instruction i to each of the distributed control system and the energy management system in response to receiving the AGC signal, and is further configured to enable the energy management system to generate the control instruction based on the operation parameter transmitted by the distributed control system and the frequency regulation instruction, and to perform the frequency regulation on the power grid based on the control instruction. In this way, the direct communication between the energy management system and the remote terminal system can be achieved, which increases the communication speed between the energy management system and the remote terminal system to reduce the communication delay. Consequently, the energy management system can respond more rapidly to the frequency regulation demand of the power grid, thereby improving the performance of joint frequency regulation for the power grid based on the energy management system of the energy storage system, the distributed control system of the generator set and the remote terminal system.

In some embodiments, the remote terminal system is further configured to receive active power of the energy storage battery module transmitted by the converter and booster module and the operation parameter transmitted by the distributed control system,

In this embodiment, the active power of the energy storage battery module is a parameter adjusted by the converter and booster module and the energy storage battery module based on the control instruction, i.e., the actual active power output or absorbed by the energy storage battery module based on the control instruction.

The operation parameter transmitted by the distributed control system may be the active power of the generator set.

During actual execution, in a case where the energy management system completes the frequency regulation of the power grid based on the control instruction, the remote terminal system also needs to monitor an actual frequency regulation status of the power grid. Therefore, subsequent to a completion of the frequency regulation of the power grid, the actual active power of the energy storage battery module can also be transmitted by the converter and booster module to the remote terminal system, and the actual active power of the generator set can also be transmitted by the distributed control system to the remote terminal system, for the remote terminal system to monitor a completion level of the frequency regulation of the power grid.

Additionally, the remote terminal system can be further configured to receive the completion signal output by the converter and booster module. The completion signal is used to characterize a completion of the frequency regulation of the power grid based on the frequency regulation instruction.

A communication process between the converter and booster module and the remote terminal system has already been described in the above embodiments, and thus details thereof will be omitted here.

With the remote terminal system according to the embodiments of the present disclosure, an actual execution status of the joint frequency regulation can be monitored through receiving the active power of the energy storage battery module transmitted by the converter and booster module and the operation parameter transmitted by the distributed control system, facilitating subsequent related operations based on the actual execution status.

As illustrated in FIG. 1, the embodiments of the present disclosure further provide a frequency regulation system for a power grid.

In this embodiment, the frequency regulation system for the power grid includes the energy storage battery module, the converter and booster module, the energy management system as described in any one of the above embodiments, the distributed control system as described in any one of the above embodiments, and the remote terminal system as described in any one of the above embodiments.

The energy management system is connected to each of the energy storage battery module and the converter and booster module. The distributed control system is connected to the energy management system. The remote terminal system is connected to each of the energy management system and the distributed control system.

The energy storage battery module is configured to store electrical energy, and to provide power to the power grid or absorb excess power from the power grid.

The converter and booster module is configured, when the energy storage battery module provides the power to the power grid, to convert a direct current output by the energy storage battery module into an alternating current, and adjust a voltage of the alternating current to match that of the power grid, for enabling the alternating current to be delivered to the power grid. Alternatively, the converter and booster module is configured, when the energy storage battery module absorbs the excess power from the power grid, to convert an alternating current from the power grid into a direct current before the alternating current is fed into the energy storage battery module, and adjust a voltage of the direct current to match that of the energy storage battery module, for charging the energy storage battery module.

During actual execution, the remote terminal system may receive an AGC signal, and directly transmit a frequency regulation instruction to each of the distributed control system and the energy management system in response to receiving the AGC signal. The distributed control system obtains and transmits an operation parameter of the generator set to the energy management system in response to receiving the frequency regulation instruction. The energy management system receives the frequency regulation instruction transmitted by the remote terminal system and the operation parameter transmitted by the distributed control system, generates a control instruction based on the frequency regulation instruction and the operation parameter, and controls the operation status of each of the energy storage battery module and the converter and booster module based on the control instruction.

As illustrated in FIG. 1, in some embodiments, the distributed control system may include the control cabinet and the communication cabinet, and the energy management system may include the I/O conversion module, the serial port server, the control network switch, the coordination controller, and the at least one data network switch. The control cabinet of the distributed control system may be communicatively connected to each of the remote terminal system and the I/O conversion module in the energy management system through the hard wiring. The communication cabinet of the distributed control system may be connected to the serial port server in the energy management system through the communication line. The control network switch in the energy management system may be communicatively connected to each of the remote terminal system and the I/O conversion module, the serial port server, and the coordination controller in the energy management system through the communication line. The at least one data network switch may be connected to each of the coordination controller, the energy storage battery module, and the converter and booster module through the communication line.

As illustrated in FIG. 2, during actual execution, when the remote terminal system receives the AGC signal, the remote terminal system transmits the frequency regulation instruction to the control cabinet of the distributed control system through the hard wiring, and transmit the frequency regulation instruction to the control network switch in the energy management system through the communication line. The control cabinet of the distributed control system obtains and transmits the operation parameter of the generator set to the I/O conversion module in the energy management system in response to receiving the frequency regulation instruction. The I/O conversion module in the energy management system transmits the operation parameter to the control network switch. The control network switch in the energy management system receives both the frequency regulation instruction and the operation parameter and forwards the frequency regulation instruction and the operation parameter to the coordination controller. The coordination controller generates the control instruction based on a difference between the frequency regulation instruction and the operation parameter and transmits the control instruction to each of the energy storage battery module and the converter and booster module. Upon receiving the control instruction, the energy storage battery module may determine an amount of active power to be outputted or absorbed based on the control instruction, and accordingly output or absorb the active power based on the amount of active power. Upon receiving the control instruction, the converter and booster module may convert a current and a voltage during operation where the energy storage battery module output or absorb the active power, so that an output of the energy storage battery module may be delivered to the power grid, or the energy storage battery module may smoothly absorb excess active power from the power grid.

The energy storage battery module may also transmit its own electricity status to the coordination controller through the data network switch. The coordination controller may then transmit the electricity status along with other status information of the energy management system to the control network switch. This enables the control network switch to forward the electricity status and other status information of the energy management system to the distributed control system through the serial port server. In this way, the generator set can be controlled by the distributed control system for emergency frequency regulation in case of a fault in the energy management system.

Additionally, when the energy management system completes the frequency regulation of the power grid based on the control instruction, the converter and booster module may also transmit the actual active power of the energy storage battery module to the remote terminal system, and the distributed control system may also transmit the actual active power of the generator set to the remote terminal system, for the remote terminal system to monitor the completion level of the frequency regulation of the power grid. When the energy management system completes the frequency regulation of the power grid based on the control instruction, the converter and booster module may also transmit the completion signal to the remote terminal system, indicating the completion of the frequency regulation of the power grid based on the frequency regulation instruction.

In some embodiments, the frequency regulation system for the power grid may be further configured to execute the following control logic. When the remote terminal system receives the AGC signal, the remote terminal system transmits the frequency regulation instruction to the control cabinet of the distributed control system through the hard wiring. The control cabinet in the distributed control system generates the control instruction based on the frequency regulation instruction and the operation parameter of the generator set, and forwards the control instruction to the control network switch through the I/O conversion module in the energy management system. The control network switch forwards the control instruction to the coordination controller. The coordination controller then forwards the control instruction to the energy storage battery module and the converter and booster module to perform the frequency regulation of the power grid.

It should be understood that, the remote terminal system may not transmit the frequency regulation instruction to the energy management system, but instead the distributed control system transmits the control instruction to the energy management system. The frequency regulation of the power grid is performed by the energy management system based on the control instruction, enhancing flexibility of an execution logic of the frequency regulation system for the power grid.

According to the embodiments of the present disclosure, the frequency regulation system for the power grid includes: the energy storage battery module; the converter and booster module; the energy management system configured to receive the frequency regulation instruction transmitted by the remote terminal system and the operation parameter of the generator set transmitted by the distributed control system, generate the control instruction based on the frequency regulation instruction and the operation parameter, and perform the frequency regulation on the power grid based on the control instruction; the distributed control system configured to obtain and transmit, to the energy management system, the operation parameter of the generator set in response to receiving the frequency regulation instruction transmitted by the remote terminal system; and the remote terminal system configured to transmit the frequency regulation instruction to each of the distributed control system and the energy management system in response to receiving the AGC signal. In this way, the direct communication between the energy management system and the remote terminal system can be achieved, which increases the communication speed between the energy management system and the remote terminal system to reduce the communication delay. Consequently, the energy management system can respond more rapidly to the frequency regulation demand of the power grid, thereby improving the performance of joint frequency regulation for the power grid based on the energy management system of the energy storage system, the distributed control system of the generator set and the remote terminal system.

The embodiments of the present disclosure further provide a frequency regulation method for a power grid.

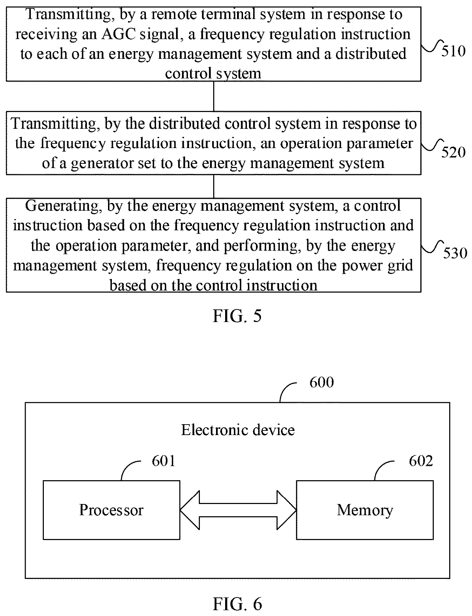

As illustrated in FIG. 5, the method may include operations at step 510, step 520, and step 530.

At step 510, a frequency regulation instruction is transmitted, by a remote terminal system in response to receiving an AGC signal, to each of an energy management system and a distributed control system.

At step 520, an operation parameter of a generator set is transmitted, by the distributed control system in response to the frequency regulation instruction, to the energy management system.

At step 530, a control instruction is generated by the energy management system based on the frequency regulation instruction and the operation parameter, and frequency regulation is performed by the energy management system on the power grid based on the control instruction.

During actual execution, the AGC signal may be received by the remote terminal system. The frequency regulation instruction may be directly transmitted by the remote terminal system to each of the distributed control system and the energy management system in response to receiving the AGC signal. The operation parameter of the generator set is obtained and transmitted by the distributed control system to the energy management system, in response to receiving the frequency regulation instruction. The frequency regulation instruction transmitted by the remote terminal system and the operation parameter transmitted by the distributed control system are received by the energy management system. Thus, the control instruction is generated by the energy management system based on the frequency regulation instruction and the operation parameter. The operation status of each of the energy storage battery module and the converter and booster module is controlled by the energy management system based on the control instruction. In this way, the frequency regulation of the power grid is achieved.

With the frequency regulation method according to the embodiments of the present disclosure, the frequency regulation instruction is transmitted, by the remote terminal system in response to receiving the AGC signal, to each of the energy management system and the distributed control system. The operation parameter of the generator set is transmitted, by the distributed control system in response to the frequency regulation instruction, to the energy management system. The control instruction is generated by the energy management system based on the frequency regulation instruction and the operation parameter. The frequency regulation is performed by the energy management system on the power grid based on the control instruction. In this way, the direct communication between the energy management system and the remote terminal system can be achieved, which increases the communication speed between the energy management system and the remote terminal system to reduce the communication delay. Consequently, the energy management system can respond more rapidly to the frequency regulation demand of the power grid, thereby improving the performance of joint frequency regulation for the power grid based on the energy management system of the energy storage system, the distributed control system of the generator set and the remote terminal system.

In some embodiments, the embodiments of the present disclosure further provide a frequency regulation method for a power grid. The frequency regulation method is applied in an energy management system. The energy management system is adapted to be communicatively connected to each of a remote terminal system and a distributed control system. The method includes: receiving a frequency regulation instruction transmitted by the remote terminal system and an operation parameter of a generator set transmitted by the distributed control system; generating a control instruction based on the frequency regulation instruction and the operation parameter; and performing frequency regulation on a power grid based on the control instruction.

With the frequency regulation method according to the embodiments of the present disclosure, the frequency regulation instruction transmitted by the remote terminal system and the operation parameter of the generator set transmitted by the distributed control system are directly received by the energy management system. The control instruction is generated by the energy management system based on the frequency regulation instruction and the operation parameter. Thus, the frequency regulation is performed on the power grid by the energy management system based on the control instruction. In this way, direct communication between the energy management system and the remote terminal system can be achieved, which increases a communication speed between the energy management system and the remote terminal system to reduce a communication delay. Consequently, the energy management system can respond more rapidly to the frequency regulation demand of the power grid, thereby improving the performance of joint frequency regulation for the power grid based on the energy management system of the energy storage system, the distributed control system of the generator set and the remote terminal system.

In some embodiments, the method further includes transmitting status information of the energy management system to the distributed control system.

In some embodiments, the embodiments of the present disclosure further provide a frequency regulation method for a power grid. The frequency regulation method is applied in a distributed control system. The distributed control system is adapted to be communicatively connected to each of an energy management system and a remote terminal system. The frequency regulation method includes: obtaining an operation parameter of a generator set in response to receiving a frequency regulation instruction transmitted by the remote terminal system; and transmitting the operation parameter to the energy management system. The operation parameter is used for enabling the energy management system to perform frequency regulation on a power grid in combination with the frequency regulation instruction transmitted by the remote terminal system to the energy management system.

With the frequency regulation method according to the embodiments of the present disclosure, the operation parameter of the generator set is obtained by the distributed control system in response to receiving the frequency regulation instruction transmitted by the remote terminal system, and transmitted by the distributed control system the operation parameter to the energy management system, in such a manner that the energy management system can perform the frequency regulation on the power grid based on the operation parameter and in combination with the frequency regulation instruction transmitted by the remote terminal system to the energy management system. In this way, the direct communication between the energy management system and the remote terminal system can be achieved, which increases the communication speed between the energy management system and the remote terminal system to reduce the communication delay. Consequently, the energy management system can respond more rapidly to the frequency regulation demand of the power grid, thereby improving the performance of joint frequency regulation for the power grid based on the energy management system of the energy storage system, the distributed control system of the generator set and the remote terminal system.

In some embodiments, the method may further include receiving status information of the energy management system transmitted by the energy management system.

In some embodiments, the embodiments of the present disclosure further provide a frequency regulation method for a power grid. The frequency regulation method is applied in a remote terminal system. The remote terminal system is adapted to be communicatively connected to each of a distributed control system and an energy management system. The frequency regulation method includes: transmitting a frequency regulation instruction to each of the distributed control system and the energy management system in response to receiving an AGC signal. The frequency regulation instruction is used for enabling the distributed control system to obtain an operation parameter of a generator set and to transmit the operation parameter to the energy management system. The frequency regulation instruction is further used for enabling the energy management system to generate a control instruction based on the operation parameter transmitted by the distributed control system and the frequency regulation instruction, and to perform frequency regulation on a power grid based on the control instruction.

With the frequency regulation method according to the embodiments of the present disclosure, the frequency regulation instruction is transmitted by the remote terminal system to each of the distributed control system and the energy management system in response to receiving the AGC signal. Further, the energy management system is enabled by the frequency regulation instruction to generate the control instruction based on the operation parameter transmitted by the distributed control system and the frequency regulation instruction, and to perform the frequency regulation on the power grid based on the control instruction. In this way, the direct communication between the energy management system and the remote terminal system can be achieved, which increases the communication speed between the energy management system and the remote terminal system to reduce the communication delay. Consequently, the energy management system can respond more rapidly to the frequency regulation demand of the power grid, thereby improving the performance of joint frequency regulation for the power grid based on the energy management system of the energy storage system, the distributed control system of the generator set and the remote terminal system.

In some embodiments, the frequency regulation method may further include: receiving active power of an energy storage battery module transmitted by a converter and booster module and the operation parameter transmitted by the distributed control system. The active power of the energy storage battery module is a parameter adjusted by the converter and booster module and the energy storage battery module based on the control instruction.

In some embodiments, as illustrated in FIG. 6, the embodiments of the present disclosure further provide an electronic device 600, including a processor 601, a memory 602, and a computer program stored on the memory 602 and executable on the processor 601. The computer program, when executed by the processor 601, implements each process of the above frequency regulation method for a power grid according to the embodiments of the present disclosure, and achieves the same technical effects. To avoid repetition, details thereof are omitted here.

It should be noted that the electronic device according to the embodiments of the present disclosure includes the above-mentioned mobile electronic device and non-mobile electronic device.

The embodiments of the present disclosure further provide a non-transitory computer-readable storage medium. The non-transitory computer-readable storage medium stores a computer program. The computer program, when executed by a processor, implements each process of the above frequency regulation method for a power grid according to the embodiments of the present disclosure, and achieves the same technical effects. To avoid repetition, details thereof are omitted here.

The processor is described in the electronic device according to the above embodiments. The readable storage medium includes a computer-readable storage medium, such as a computer read-only memory (ROM), a random access memory (RAM), a magnetic disk, or an optical disc.

The embodiments of the present disclosure further provide a computer program product, including a computer program. The computer program, when executed by a processor, implements the above frequency regulation method for a power grid.

The processor is described in the electronic device according to the above embodiments. The readable storage medium includes a computer-readable storage medium, such as a computer ROM, an RAM, a magnetic disk, or an optical disc.

The embodiments of the present disclosure further provide a chip. The chip includes a processor and a communication interface. The communication interface is coupled to the processor. The processor is configured to execute a program or an instruction to implement each process of the above frequency regulation method according to the embodiments of the present disclosure, and achieves the same technical effects. To avoid repetition, details thereof are omitted here.

It should be understood that the chip mentioned in the embodiments of the present disclosure may also be referred to as a system-level chip, a system-chip, a chip system, or a system-on-chip.

It should be noted that, in the present disclosure, terms "comprise", "include" or any other variations thereof are intended to cover non-exclusive inclusions, such that the process, method, goods, or apparatus including a series of elements do not only include those elements, but further include other elements that are not explicitly listed, or further include inherent elements of the process, method, goods, or apparatus. In a case that there are no more restrictions, an element qualified by the statement "comprises a ..." does not exclude the presence of additional identical elements in the process, method, goods, or apparatus that includes the said element. In addition, it should be noted that, the scope of the method and the apparatus according to the embodiments of the present disclosure is not limited to performing a function in a sequence shown or discussed, and may further include performing a function in a substantially simultaneous manner or a reverse sequence based on the function involved. For example, the described method may be performed in a sequence different from the described sequence, and various steps may also be added, omitted, or combined. Additionally, features described with reference to certain examples may be combined in other examples.

From the description of the above embodiments, those skilled in the art can clearly understand that the method according to the above embodiments can be implemented by means of software, together with a necessary general hardware platform, and of course can also be implemented by means of hardware, but in many cases the former means is a better implementation. Based on this understanding, all or part of the technical solutions according to the present disclosure, or the part thereof that contributes to the prior art, can be embodied in the form of a software product. The computer software product is stored in a storage medium (e.g., an ROM/RAM, a magnetic disk, or an optical disc) and contains instructions to enable a terminal (e.g., a mobile phone, a computer, a server, or a network device, etc.) to perform the method described in each of the embodiments of the present disclosure.

The embodiments of the present disclosure are described above with reference to the accompanying drawings, but the present disclosure is not limited to the above specific implementations, which are merely illustrative, rather than restrictive. Under the motivation of the present disclosure, those skilled in the art can also make many variations without departing from the principles of the present disclosure and the protection scope of the claims as appended. These variations are to be encompassed by the protect scope of present disclosure.

Reference throughout this specification to "an embodiment", "some embodiments", "illustrative embodiments", "an example", "a specific example", or "some examples" means that a particular feature, structure, material, or characteristic described in connection with the embodiment or example is included in at least one embodiment or example of the present disclosure. The appearances of the above phrases in various places throughout this specification are not necessarily referring to the same embodiment or example. Further, the particular features, structures, materials, or characteristics may be combined in any suitable manner in one or more embodiments or examples.

Although embodiments of the present disclosure have been illustrated and described, it is conceivable for those skilled in the art that various changes, modifications, replacements, and variations can be made to these embodiments without departing from the principles and spirit of the present disclosure. The scope of the present disclosure shall be defined by the claims as appended and their equivalents.

## Claims

1. An energy management system, adapted to be communicatively connected to each of a remote terminal system and a distributed control system, wherein the energy management system is configured to:
receive a frequency regulation instruction transmitted by the remote terminal system and an operation parameter of a generator set transmitted by the distributed control system;
generate a control instruction based on the frequency regulation instruction and the operation parameter; and
perform frequency regulation on a power grid based on the control instruction.

2. The energy management system according to claim 1, comprising:
an I/O conversion module, configured to be communicatively connected to a control cabinet in the distributed control system, and to receive the operation parameter transmitted by the control cabinet.

3. The energy management system according to claim 2, wherein the I/O conversion module is configured to be communicatively connected to the control cabinet through hard wiring.

4. The energy management system according to claim 1, wherein the energy management system is configured to be communicatively connected to a communication cabinet in the distributed control system through a communication line.

5. The energy management system according to claim 4, further comprising:
a serial port server, configured to be communicatively connected to the communication cabinet in the distributed control system, and to transmit status information of the energy management system to the communication cabinet.

6. The energy management system according to any one of claims 1 to 5, comprising:
a control network switch, configured to be connected to the remote terminal system through a communication line, and to receive the frequency regulation instruction transmitted by the remote terminal system.

7. The energy management system according to any one of claims 1 to 5, wherein the energy management system is configured to receive the frequency regulation instruction transmitted by the remote terminal system based on a Modbus RTU communication protocol.

8. A distributed control system, adapted to be communicatively connected to each of an energy management system and a remote terminal system, wherein the distributed control system is configured to:
obtain an operation parameter of a generator set in response to receiving a frequency regulation instruction transmitted by the remote terminal system; and
transmit the operation parameter to the energy management system, wherein the operation parameter is used for enabling the energy management system to perform frequency regulation on a power grid in combination with the frequency regulation instruction transmitted by the remote terminal system to the energy management system.

9. The distributed control system according to claim 8, comprising:
a control cabinet configured to transmit the operation parameter to the energy management system.

10. The distributed control system according to claim 8, further comprising:
a communication cabinet configured to receive status information of the energy management system transmitted by a serial port server comprised in the energy management system.

11. A remote terminal system, adapted to be communicatively connected to each of a distributed control system and an energy management system, wherein the remote terminal system is configured to:
transmit a frequency regulation instruction to each of the distributed control system and the energy management system in response to receiving an automatic generation control, AGC, signal, wherein the frequency regulation instruction is used for enabling the distributed control system to obtain an operation parameter of a generator set and to transmit the operation parameter to the energy management system, and the frequency regulation instruction is further used for enabling the energy management system to generate a control instruction based on the operation parameter transmitted by the distributed control system and the frequency regulation instruction, and to perform frequency regulation on a power grid based on the control instruction.

12. The remote terminal system according to claim 11, wherein the remote terminal system is further configured to:
receive active power of an energy storage battery module transmitted by a converter and booster module and the operation parameter transmitted by the distributed control system, wherein the active power of the energy storage battery module is a parameter adjusted by the converter and booster module and the energy storage battery module based on the control instruction.

13. A frequency regulation system for a power grid, comprising:
an energy storage battery module;
a converter and booster module;
the energy management system according to any one of claims 1 to 7, the energy management system being connected to each of the energy storage battery module and the converter and booster module;
a distributed control system according to any one of claims 8 to 10, the distributed control system being connected to the energy management system; and
a remote terminal system according to claim 11 or claim 12, the remote terminal system being connected to each of the energy management system and the distributed control system.

14. A frequency regulation method for a power grid, the method comprising:
transmitting, by a remote terminal system in response to receiving an automatic generation control, AGC, signal, a frequency regulation instruction to each of an energy management system and a distributed control system;
transmitting, by the distributed control system in response to the frequency regulation instruction, an operation parameter of a generator set to the energy management system; and
generating, by the energy management system, a control instruction based on the frequency regulation instruction and the operation parameter, and performing, by the energy management system, frequency regulation on the power grid based on the control instruction.
